# EUROPEAN PATENT APPLICATION

(11) **EP 4 512 510 A1**
(43) Date of publication of application: **26.02.2025**
(21) Application number: 22938406.0
(22) Date of filing: 18.04.2022
(51) Int. Cl.: B01D 53/86, B01J 23/22, B01J 23/28

(54) **EXHAUST GAS DENITRATION METHOD**

(71) Applicant: The Chugoku Electric Power Co., Inc., Hiroshima-shi, Hiroshima 730-8701 (JP); Tokyo Metropolitan Public University Corporation, Shinjuku-ku Tokyo 163-0926 (JP)
(72) Inventor: KIYONAGA Eiji, Hiroshima-shi, Hiroshima 730-8701 (JP); YOSHIDA Kazuhiro, Hiroshima-shi, Hiroshima 730-8701 (JP); SAKOTANI Sousuke, Hiroshima-shi, Hiroshima 730-8701 (JP); MORITA Keiichiro, Hiroshima-shi, Hiroshima 730-8701 (JP); MURAYAMA Toru, Hachioji-shi, Tokyo 192-0397 (JP); INOMATA Yusuke, Hachioji-shi, Tokyo 192-0397 (JP)
(74) Representative: HGF
(86) International application number: PCT/JP2022/018036
(87) International publication number: WO 2023/203603

(57) **Abstract**

The present invention provides an exhaust gas denitration method that, in selective catalytic reduction reactions using ammonia as a reducing agent, exhibits an excellent denitration ratio at low temperatures and in the presence of water vapor and SO₂. Provided is an exhaust gas denitration method in which a denitration reaction is performed by bringing a vanadium oxide and a denitration catalyst containing a second metal into contact with exhaust gas containing SO₂, wherein the vanadium oxide is contained in the denitration catalyst in the amount of 50 mass% or more in terms of vanadium pentoxide, and the second metal is at least one of W and Mo.

## Description

### TECHNICAL FIELD

The present invention relates to an exhaust gas denitration method.

### BACKGROUND ART

As one class of the pollutants exhausted to the atmosphere by combustion of fuel, nitrogen oxides (NO, NO₂, NO₃, N₂O, N₂O₃, N₂O₄, and N₂O₅) can be exemplified. Nitrogen oxides cause acid rain, ozone layer destruction, photochemical smog, and the like, and have serious influences on the environment and human body, and therefore, the treatment thereof has become an important problem.

As a technique for removing the nitrogen oxides, a selective catalytic reduction (NH₃-SCR) using ammonia (NH₃) as a reducing agent is known. As described in Patent Document 1, catalysts including titanium oxide as a carrier and a vanadium oxide supported thereon are widely used as the catalyst in the selective catalytic reduction. Titanium oxide is the best carrier due to low activity thereof against sulfur oxides and high stability.

On the other hand, although a vanadium oxide plays a major role in NH₃-SCR, the vanadium oxide oxidizes SO₂ to SO₃, and thus could not be supported on the catalyst in a content of about 1 wt% or more. In addition, in the conventional NH₃-SCR, since a catalyst in which vanadium oxide is supported on a titanium oxide carrier hardly reacts at a low temperature, it was unavoidable to use the catalyst at a high temperature of 350 to 400°C.

Thereafter, the present inventors found a denitration catalyst containing vanadium pentoxide in an amount of 43 wt% or more, having a BET specific surface area of 30 m²/g or more, and being used for denitration at 200°C or less (Patent Document 2).

### Citation List

### Patent Document

Patent Document 1: Japanese Unexamined Patent Application, Publication No. 2004-275852
Patent Document 2: PCT International Publication No. WO2018-047356

### DISCLOSURE OF THE INVENTION

### Problems to be Solved by the Invention

Although the denitration catalyst described in Patent Document 2 can achieve a preferable denitration ratio at 200°C or lower, since in many cases, water vapor and SO₂ coexist under the situation where the denitration catalyst is actually used, there was still room for improvement in the denitration ratio in the presence of water vapor and SO₂. As a result of diligent investigations for further improvement in the denitration catalyst disclosed in Patent Document 2, the present inventors have found a denitration method capable of achieving a preferable denitration ratio particularly at 200°C or lower in the presence of water vapor and SO₂.

An object of the present invention is to provide a denitration method having an excellent denitration ratio at a low temperature in the presence of water vapor and SO₂ in the selective catalytic reduction using ammonia as a reducing agent.

### Means for Solving the Problems

(1) The present invention relates to an exhaust gas denitration method, including bringing a denitration catalyst including a vanadium oxide and a second metal into contact with an exhaust gas containing SO₂, in which the denitration catalyst includes the vanadium oxide in an amount of 50% by mass or more in terms of vanadium pentoxide, and the second metal is at least one of W or Mo.
(2) The exhaust gas denitration method as described in (1), in which a concentration of SO₂ in the exhaust gas is 1 ppm or more.
(3) The exhaust gas denitration method as described in (1) or (2), in which temperature of the exhaust gas is 200°C.

### Effects of the Invention

The present invention can provide an exhaust gas denitration method excellent in the denitration ratio at a low temperature in the presence of water vapor and SO₂ in a selective catalytic reduction using ammonia as a reducing agent.

### BRIEF DESCRIPTION OF THE DRAWINGS

FIG. 1 is a graph comparing denitration ratios in the presence of SO₂ between denitration catalysts of an Example and a Comparative Example;
FIG. 2 is a graph showing a relationship between reaction temperatures and denitration ratios of denitration catalysts of Examples and a Comparative Example;
FIG. 3 is a graph comparing denitration ratios of denitration catalysts of Examples and a Comparative Example;
FIG. 4 is a graph comparing denitration ratios of denitration catalysts of Examples and a Comparative Example;
FIG. 5 is a graph comparing denitration ratios of denitration catalysts of an Example and a Comparative Example; and
FIG. 6 is a graph showing a relationship between SO₂ concentrations and denitration ratios of denitration catalysts of an Example and a Comparative Example.

### PREFERRED MODE FOR CARRYING OUT THE INVENTION

### <Exhaust Gas Denitration Method>

The exhaust gas denitration method according to the present embodiment includes bringing a denitration catalyst including a vanadium oxide and a second metal into contact with an exhaust gas containing SO₂. As a specific method, a method known as a selective reduction catalytic reaction using anhydrous ammonia, ammonia water, or urea as the reducing agent can be used.

The exhaust gas denitration method according to the present embodiment can achieve a high denitration ratio even when the denitration reaction is performed under a water vapor atmosphere and a SO₂ atmosphere. The concentration of SO₂ in the denitration reaction may be, for example, 1 ppm or more, 2 ppm or more, 5 ppm or more, 15 ppm or more, 100 ppm or more, or 1,000 ppm or more.

### <Denitration Catalyst>

The denitration catalyst according to the present embodiment includes 50 mass% or more of a vanadium oxide in the denitration catalyst, in terms of vanadium pentoxide, and includes a second metal. The second metal is at least one of W or Mo. The denitration catalyst according to the present embodiment exhibits a high denitration ratio even in a low temperature environment, in the presence of water vapor, and in the presence of SO₂, as compared with conventionally used denitration catalysts.

In the following description, the denitration ratio may be expressed as a NO conversion ratio. The NO conversion ratio is represented by the following Formula (1). NO conversion ratio (%) - (NO concentration before denitration reaction - NO concentration after denitration reaction)/(NO concentration before denitration reaction) × 100 (1)

### (Vanadium Oxide)

Examples of the vanadium oxide used in the denitration catalyst according to the present embodiment include vanadium(II) oxide (VO), vanadium(III) trioxide (V₂O₃), vanadium(IV) tetraoxide (V₂O₄), and vanadium(V) pentoxide (V₂O₅). As the vanadium oxide, vanadium pentoxide is preferable. Atom V of vanadium pentoxide may have a valence of 5, 4, 3, or 2 during the denitration reaction.

The vanadium oxide is contained in the denitration catalyst in an amount of 50 wt% or more, and more preferably, 60 wt% or more, in terms of vanadium pentoxide.

### (Second Metal)

The second metal used in the denitration catalyst according to the present embodiment is at least one of W or Mo. By containing the second metal, the denitration catalyst containing a vanadium oxide as a main component can achieve a high denitration ratio even in a low temperature environment, in the presence of water vapor, and in the presence of SO₂, as compared with conventional denitration catalysts.

### [Content of Second Metal]

The content of the second metal may be 1 wt% or more and 40 wt% or less, and is preferably 2 wt% or more and 38 wt% or less. The content of the second metal is more preferably 2 wt% or more and 10 wt% or less. The content of the second metal is more preferably 2 wt% or more and 7 wt% or less. The content of the second metal is more preferably 3 wt% or more and 7 wt% or less. The content of the second metal is more preferably 3 wt% or more and 5 wt% or less. The content of the second metal is more preferably 3 wt% or more and 4 wt% or less.

### [Calcining Temperature of Denitration Catalyst]

The denitration catalyst, the details of which will be described later, according to the present embodiment is obtained by, for example, calcining a precursor containing a vanadium oxide and a second metal. The temperature during the calcining is preferably 260 to 400°C, more preferably 260 to 350°C, and still more preferably 260 to 320°C.

### (Other Substance)

The denitration catalyst according to the present embodiment may contain other substances as long as the effects of the present invention are not impaired. For example, the denitration catalyst according to the present embodiment preferably further contains carbon in addition to the above. It is considered that when the denitration catalyst contains carbon as an impurity, strain occurs in lines or planes in the crystal lattice in the above-described vanadium oxide crystal structure, which attains a high denitration ratio in a low-temperature environment. The content of carbon is preferably 0.05 wt% or more and 3.21 wt% or less in the denitration catalyst. The carbon content is more preferably 0.07 wt% or more and 3.21 wt% or less. The carbon content is more preferably 0.11 wt% or more and 3.21 wt% or less. The carbon content is more preferably 0.12 wt% or more and 3.21 wt% or less. The carbon content is more preferably 0.14 wt% or more and 3.21 wt% or less. The carbon content is more preferably 0.16 wt% or more and 3.21 wt% or less. The carbon content is more preferably 0.17 wt% or more and 3.21 wt% or less. The carbon content is more preferably 0.70 wt% or more and 3.21 wt% or less.

The nitration catalyst according to the present embodiment is preferably used in the denitration reaction at 350°C or lower. The present denitration reaction is preferable, because a high denitration ratio can be obtained even at a reaction temperature of 300°C or less. The present denitration reaction is preferable, because oxidation of SO₂ to SO₃ does not occur, when the reaction is carried out at a reaction temperature of 200°C or lower. The reaction temperature is more preferably 100 to 250°C, and still more preferably 160 to 200°C. The reaction temperature may be 80 to 150°C. Further, when a denitration catalyst consisting of vanadium(V) pentoxide (V₂O₅) alone as the denitration catalyst is used at a reaction temperature of 300°C or more, the catalyst itself is changed, that is, for example, the specific surface area is decreased, and thus the reaction temperature cannot be set to 300°C or more. The denitration catalyst according to the present embodiment including the second metal can maintain a high denitration ratio, even when the reaction temperature is set to 300°C or higher.

### <Method for Producing Denitration Catalyst>

The denitration catalyst according to the present embodiment can be produced, for example, as follows. First, a precursor containing each component contained in the denitration catalyst is prepared. Vanadium oxide contained in the denitration catalyst is contained in the precursor as, for example, an aqueous solution of a vanadate. As the vanadate, ammonium metavanadate, magnesium vanadate, strontium vanadate, barium vanadate, zinc vanadate, lead vanadate, lithium vanadate, etc. may be used.

The second metal in the denitration catalyst is contained in the precursor by, for example, mixing a nitrate, a chloride, a sulfate, a chelate complex, a hydrate, an ammonium compound, a phosphate compound, or the like of the respective metals with the aqueous solution of vanadic acid. Examples of the chelate complex include complexes of oxalic acid, citric acid, or the like.

The prepared precursor solution of the denitration catalyst is evaporated to dryness to obtain a powder of the precursor of the denitration catalyst. The powder of the denitration catalyst is obtained by a calcining step of calcining the powder of the precursor at a predetermined temperature for a predetermined time. A honeycomb catalyst can be obtained by preparing a catalyst dispersion liquid in which the powder of the denitration catalyst obtained as described above is dispersed in a solvent containing a component such as a binder, repeating a step of immersing a known honeycomb molded body in the catalyst dispersion liquid and drying the dispersion liquid once or plural times, and then carrying out a calcining step of calcining the honeycomb molded body at a predetermined temperature for a predetermined time. In addition to the above, the honeycomb catalyst also can be obtained by preparing a concentrated solution obtained by concentrating the precursor solution of the denitration catalyst, repeating immersing a known honeycomb molded body in the concentrated solution and drying the solution once or plural times, and then carrying out a calcining step of calcining the obtained honeycomb molded body at a predetermined temperature for a predetermined time. As described above, the calcining temperature in the calcining step is preferably 260 to 400°C, more preferably 260 to 350°C, and still more preferably 260 to 320°C.

The present invention is not limited to the above-described embodiments, and modifications, improvements, and the like within the scope in which the object of the present invention can be achieved are included in the present invention.

### EXAMPLES

Hereinafter, the present invention will be specifically described with reference to Examples. The present invention is not limited by these Examples.

### <Preparation of Denitration Catalysts>

### (Example 1)

11.49 g (127.6 mmol) of oxalic acid ((COOH)₂) was added to a mixture of 4.95 g (42.31 mmol) of ammonium vanadate (NH₄VO₃), 1.535 mmol of metatungstic acid in a molar content with respect to the atom W, and 20 ml of pure water, stirred at room temperature for 10 minutes, and then stirred at 70°C for 12 hours. This precursor sample was calcined in an electric furnace at 300°C for 4 hours to obtain a denitration catalyst of vanadium pentoxide (V₂O₅) containing tungsten (W). The amount of ammonium vanadate as a raw material was adjusted so that a total weight ratio of WO₃ in terms of metal oxide (WO₃) was 8.5 wt% (3.5 mol%) per W atom in the produced denitration catalyst.

### (Example 2)

A precursor complex was synthesized by dissolving 4.96 g (42.4 mmol) of ammonium vanadate (NH₄VO₃) and 11.5 g (127.8 mmol) of oxalic acid ((COOH)₂) in pure water. Hexaammonium heptamolybdate tetrahydrate having a molar amount of 2.245 mmol with respect to Mo atom was added to the precursor complex. The obtained vanadium-heterometallic complex mixture was calcined twice at a temperature of 300°C for 4 hours in an electric furnace to obtain a denitration catalyst of Example 2. The amount of ammonium vanadate as a raw material was adjusted so that a total weight ratio of MoO₃ in terms of metal oxide (MoO₃) was 7.7 wt% (5.0 mol%) per Mo atom in the produced denitration catalyst.

### (Comparative Example 1)

A denitration catalyst of Comparative Example 1 was prepared in the same manner as in Examples 1 and 2, except that the amounts of ammonium vanadate (NH₄VO₃) and oxalic acid ((COOH)₂) used were as shown in Table 1.

**[Table 1]**

| | Vanadium oxide | Second metal | | |
|---|---|---|---|---|
| | Amount charged NH₄VO₃ (mmol) | Blending | | Total amount in terms of metal oxide (mol%) |
| | | Substance name blended | Amount charged (mmol) | |
| Example 1 | 42.31 | (NH₄)₆H₂W₁₂O₄₀ · nH₂O | 1.535 | 3.5 |
| Example 2 | 42.4 | (NH₄)₆Mo₇O₂₄ · 4H₂O | 2.245 | 5.3 |
| Comparative Example 1 | 43.85 | - | - | - |

### [Presence or Absence of Second Metal and NO Conversion Ratio (in the Absence of Water Vapor and in the Presence of SO₂)]

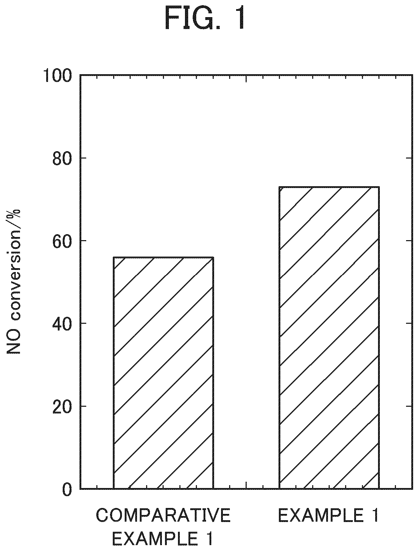

FIG. 1 is a graph comparing the NO conversion ratio of the denitration catalyst of Example 1 and the NO conversion ratio of the denitration catalyst of Comparative Example 1. The reaction temperature was set to 150°C, Ar gas containing NO (250 ppm), NH₃ (250 ppm), SO₂ (100 ppm), and 4 vol% of O₂ was used, and the gas flow rate was set to 250 mL/min⁻¹. As shown in FIG. 1, it was confirmed that with the denitration catalyst of Example 1, a high NO conversion ratio was obtained as compared with the denitration catalyst of Comparative Example 1.

### [Type of Second Metal, Reaction Temperature, and NO Conversion Ratio (in the Presence of Water Vapor, in the Presence of SO₂)]

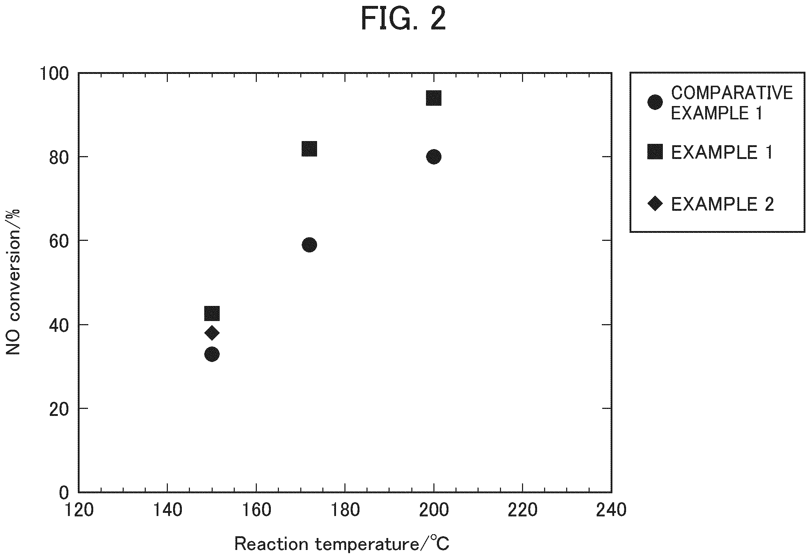

FIG. 2 is a graph showing a relationship between the reaction temperature and the NO conversion ratio of the denitration catalysts according to Examples and a Comparative Example. The vertical axis of FIG. 2 represents the NO conversion ratio, and the horizontal axis of FIG. 2 represents the reaction temperature (°C). The conditions of the reaction gas were such that a reaction gas containing 10 vol% of H₂O relative to the reaction gas of FIG. 1 was used. As shown in FIG. 2, it was confirmed that with the denitration catalyst of each Example, a high NO conversion ratio was obtained in the presence of water vapor and in the presence of SO₂ as compared with the denitration catalyst of Comparative Example 1.

### [Presence or Absence of Second Metal and NO Conversion Ratio (in the Presence of Water Vapor and in the Presence of SO₂)]

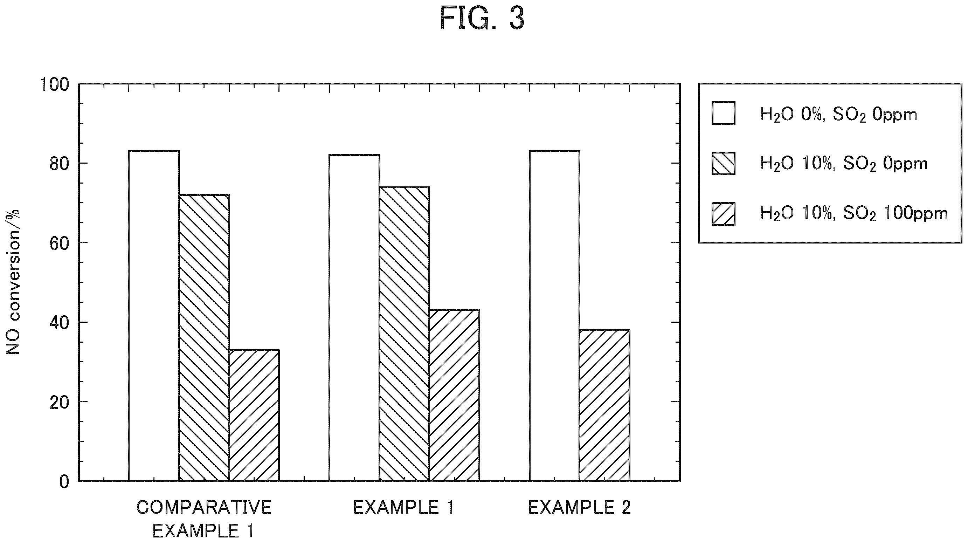

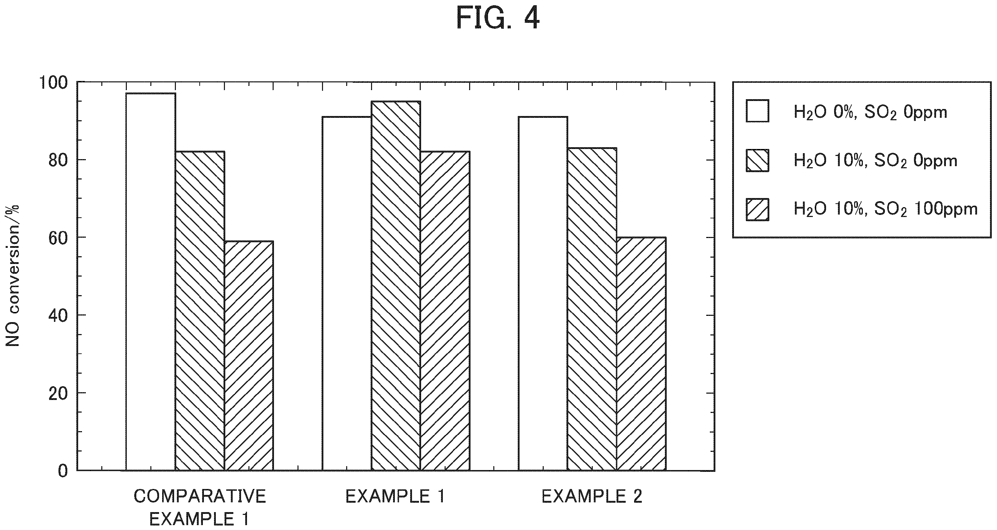

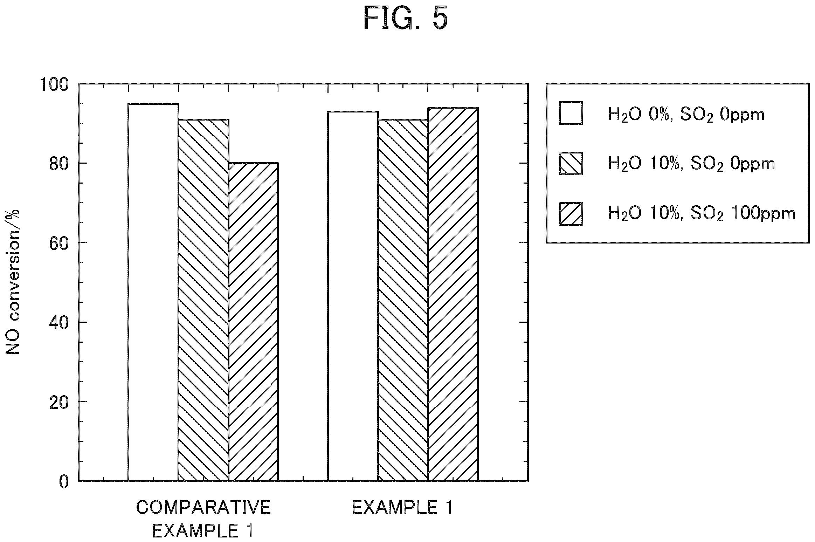

FIG. 3 is a graph comparing denitration ratios of denitration catalysts of Examples and a Comparative Example when the reaction temperature was set to 150°C. "0% H₂O" in FIG. 3 was the same as the reaction gas in FIG. 1, except that SO₂ (100 ppm) was not contained. Similarly, "10% H₂O" was the same as the reaction gas in FIG. 1, except that SO₂ (100 ppm) was not contained and instead 10% by volume of H₂O was contained. Similarly, "10% H₂O, SO₂ 100 ppm" was a condition in which a reaction gas containing 10% by volume of H₂O relative to the reaction gas in FIG. 1 was used. The conditions in FIG. 4 were the same as those in FIG. 3, except that the reaction temperature was 172°C. The conditions in FIG. 5 were the same as those in FIG. 3, except that the reaction temperature was 200°C. As shown in FIG. 3, FIG. 4, and FIG. 5, it was confirmed that the denitration catalysts of the Examples could achieve high NO conversion ratios in the presence of water vapor and in the presence of SO₂ as compared with the denitration catalyst of Comparative Example 1. In addition, it was confirmed that the NO conversion ratio equal to or higher than that of the denitration catalyst of the Comparative Example was obtained even in the case where SO₂ (100 ppm) was not contained or in the case where water vapor was not contained.

### [SO₂ Concentration and NO Conversion Ratio]

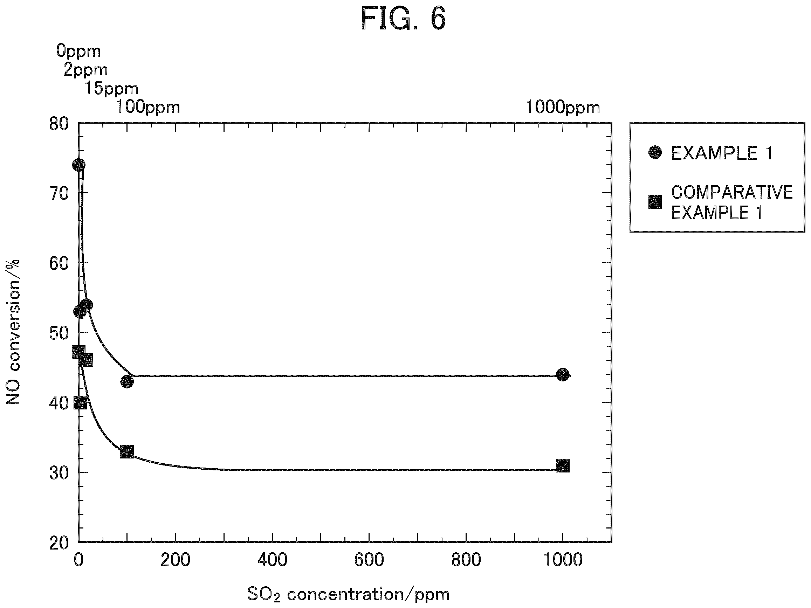

FIG. 6 is a graph comparing NO conversion rates of the denitration catalysts of Example 1 and Comparative Example 1 when the SO₂ concentration in the reaction gas was changed. A test was conducted at a reaction temperature of 150°C by further adding 0 ppm, 2 ppm, 15 ppm, 100 ppm, or 1,000 ppm of SO₂ to the reaction gas of "10% H₂O" in FIG. 3. The vertical axis of FIG. 6 represents the NO conversion ratio, and the horizontal axis of FIG. 6 represents the SO₂ concentration in the reaction gas. As shown in FIG. 6, it was confirmed that the denitration catalyst of Example 1 achieves a higher NO conversion ratio than the denitration catalyst of Comparative Example 1 even when the SO₂ concentration increased.

## Claims

1. An exhaust gas denitration method, comprising bringing a denitration catalyst comprising a vanadium oxide and a second metal into contact with an exhaust gas comprising SO₂,
wherein the denitration catalyst comprises the vanadium oxide in an amount of 50% by mass or more in terms of vanadium pentoxide, and
the second metal is at least one of W or Mo.

2. The exhaust gas denitration method according to claim 1, wherein a concentration of SO₂ in the exhaust gas is 1 ppm.

3. The exhaust gas denitration method according to claim 1 or 2, wherein temperature of the exhaust gas is 200°C.
